Europäisches Patentamt

European Patent Office

Office européen des brevets

(11) Publication number: **0 174 529 B1**

(12) **EUROPEAN PATENT SPECIFICATION**

(45) Date of publication of patent specification: **28.12.88**

(51) Int. Cl.⁴: **C 04 B 38/06**

(21) Application number: **85110514.8**

(22) Date of filing: **21.08.85**

(54) Method for manufacturing a ceramic body having a permeable porous structure.

(30) Priority: **21.08.84 JP 174692/84**
**30.08.84 JP 182271/84**

(43) Date of publication of application:
**19.03.86 Bulletin 86/12**

(45) Publication of the grant of the patent:
**28.12.88 Bulletin 88/52**

(84) Designated Contracting States:
**DE FR GB IT**

(56) References cited:
**GB-A-1 054 421**
**GB-A-1 461 509**
**US-A-3 510 323**
**US-A-3 880 969**
**US-A-4 056 586**
**US-A-4 104 077**

**CHEMICAL ABSTRACTS, vol. 98, no. 12, March
1983, page 303, no. 94544d, Columbus, Ohio,
US; & JP - A - 57 176 108 (JAPAN
AUTOMOBILE RESEARCH INSTITUTE, INC.)
29-10-1982**

(73) Proprietor: **KUROSAKI REFRACTORIES CO. LTD.**
**1-1, Higashihama-machi Yahatanishi-ku**
**Kitakyushu-shi Fukuoka 806 (JP)**

(72) Inventor: **Kido, Tomoyuki**
**7-10, Kinkei-cho Kokurakita-ku**
**Kitakyushu-shi Fukuoka-ken (JP)**
Inventor: **Masuda, Toshihide**
**1-19, Nishinarumizu 2-chome Yahatanishi-ku**
**Kitakyushu-shi Fukuoka-ken (JP)**

(74) Representative: **Schön, Alfred, Dr.**
**Patentanwälte Müller-Boré, Deufel, Schön,
Hertel Lewald, Otto Isartorplatz 6 Postfach 26 02
47**
**D-8000 München 26 (DE)**

## Description

This invention relates to a method for manufacturing a porous ceramic body having a permeable porous structure with continuous holes or pores in it, which can be advantageously used, for example, as a ceramic filter for filtering out non-metallic inclusions or impurities from a molten metal and as a porous ceramic plug through which a gaseous flotation medium can be introduced into a molten metal to remove non-metallic inclusions or impurities from it by flotation.

Recently, the use of a porous ceramic body in the purification of a metal is becoming more commonly known. The characteristics a ceramic body required for the process depend on the shape of the continuous holes and also the strength of the ceramic material from which the body is made.

It is well known, as a manufacturing method, to sinter ceramic materials having a large particle diameter. However, the sintered body produced by this method has faults through the shape of the continuous holes being incomplete because it forms these from the apertures between particles, and in its strength because of incomplete bonding between the particles.

Another manufacturing method for obtaining a porous ceramic body, which is disclosed in Japanese Patent Publication No. 54-37617, is by pouring a ceramic slurry into a cavity containing a laminated textile having a two-dimensional reticulated structure, and then, after taking the cast body out of the mould, drying and baking it to decompose the textile. However, it is difficult to obtain the continuous holes communicating three-dimensionally with each other through the body after baking, because the holes formed tend to be blocked by the residue from decomposition of the textile.

US Patent Specification No. 4,056,586 discloses a method of preparing a filter for filtering molten metal, which comprises impregnating an open-cell resilient organic foam material with an aqueous ceramic slurry, compressing the impregnated material to expel some of the slurry, optionally forming the said slurry-coated foam into a desired curved configuration, drying optionally in a mould, burning off the organic web and sintering the ceramic material.

GB Patent Specification No. 1,461,509-A discloses a similar method for the production of a catalyst carrier, which comprises forming a shape from spherical disintegratable bodies, bonding the bodies together at their content surfaces, filling the resulting porous shape with a suspension of ceramic material and drying after the impregnated shape has at least partially hardened.

US Patent Specification No. 4,104,077 describes a process which comprises the impregnation of styrene beads compressed in a mould with a ceramic slurry, and shows the impregnation of foamed polystyrene beads with a hydraulic binder.

In Chemical Abstracts, Vol. 98, No. 12, March 1983, at page 303, there is disclosed in Abstract No. 94544.d (of Japanese Patent Specification No. JP—A—57—176109) the impregnation of a structural material of a polyurethane foam material having numerous holes by a ceramic slurry, using a mould which is removed only after firing, so as to obtain a dimensional accuracy for the fired product.

A purpose of the present invention is to provide an improved manufacturing method for reliably obtaining a ceramic body which has continuous holes, communicating in three-dimensions, together with high strength of the body itself.

Thus according to our invention we provide a method for manufacturing a ceramic body having a permeable porous structure by impregnating an organic porous body having a three-dimensional reticulated structure with numerous continuous holes therein, with a ceramic slurry within a mould and then drying and firing the resulting cast body to decompose and remove the organic structure, characterised in that the mould used is a gypsum mould.

This is done by placing an organic porous body having a three-dimensional reticulated structure in a casting mould, pouring a slurry (usually described as a "slip") of a ceramic material into the mould and, after that, drying and baking or sintering the cast body.

A mould made of gypsum has the advantageous function of absorbing water from the poured slurry so as to give the cast body improved strength and shaping ability and making it unnecessary to be strict in selecting the material and construction to be used. Conventional gypsum moulds of the kinds which are used in common casting can be used in this invention.

As the organic porous material to be placed within the casting mould, an organic material having a three-dimensional reticulated cell structure with inter-communicating inner spaces may be used, for example polyurethane foam and polyethylene foam.

Further, another feature of the present invention is to utilise the characteristics of a resilient organic porous body. The distribution of the continuous holes, which directly affect and contribute to the permeability of the ceramic body produced, can be regulated by compressing the organic porous body.

In practice, the organic porous body may be compressed before pouring the slurry or slip into it or it may be used first in its normal state and then compressed after pouring the slip into it. After that, the body may be dried and baked.

To regulate the distribution of the continuous holes formed, the extent or degree of the above-mentioned compression is preferably a compression to a volume one tenth to one half of the the orginal volume of the organic porous body. By using the procedure of compressing the organic porous body, the number of the continuous holes can be regulated without blocking any holes and without varying the diameter of the holes in the ceramic body produced. Furthermore, the bonding strength of the resulting ceramic body is not impaired.

The ceramic material employed in the method of the present invention may be any ceramic material which can be prepared in a slip or slurry form, and may be, for example, fine powders of alumina, magnesia, zirconia, zircon, spinel, mullite and silicon carbide.

The particle size of the ceramic materials should be less than 325 mesh (i.e. less than 44 micrometers) and a higher strength can be obtained by increasing the proportion of submicron grade in the particle size distribution of the ceramic material employed.

A dispersing agent can be used for preparing the casting slip, preferably an inorganic agent for example a sodium phosphate or an organic agent for example a polyacrylic acid.

The content of the ceramic material in the slurry or slip should be sufficient to maintain the fluidity of the slip, so that it can penetrate into the organic body placed in the mould. When it is desired that the ceramic body should have a higher strength after sintering, the proportion of sub-micron grade particles in the ceramic material should be increased.

According to the present invention, a porous ceramic body having high strength as well as reticulated continuous holes communicating with each other in any direction can be manufactured easily and reliably without the use of any specially designed apparatus or means, and also the permeability of the holes formed can be regulated as desired.

The invention is illustrated but not limited by the accompanying drawings.

Figure 1(a) and (b) show a first embodiment, in which (a) shows the manner of production and (b) shows the product in which the continuous holes open on to all its faces.

Figure 2(a) and (b) shows a second embodiment, in which (a) shows the manner of production and (b) shows the product in which the continuous holes open only on to specific faces.

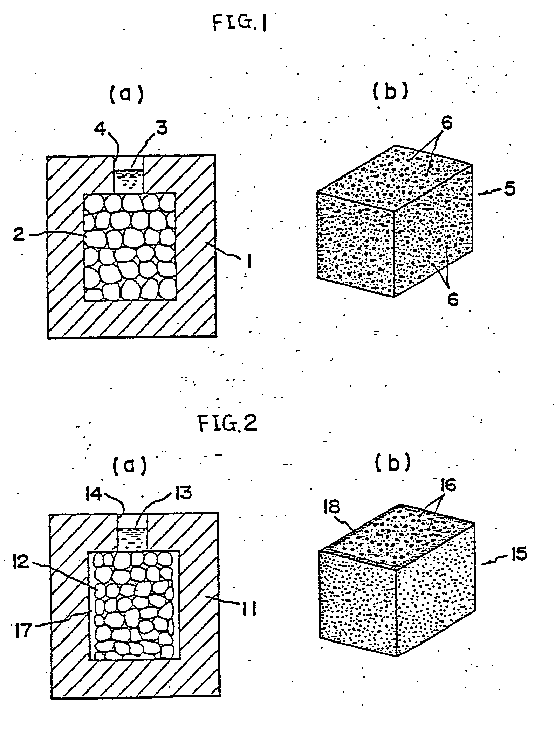

In Figure 1(a) the gypsum mould 1 is shown containing organic porous material 2, and slip material 3 which is poured into the mould through an inlet or pouring gate 4. In Figure 1(b) the product produced 5 is shown, with continuous holes in all faces 6.

In Figure 2(a) the gypsum mould 11 is shown containing organic porous material 12 and a space 17 between the inner wall of the mould 11 and the organic porous material 12, and slip material 13 which is poured into the mould through an inlet or pouring gate 14. In Figure 2(b) the product produced 15 is shown, with continuous holes 16 in one face—with a corresponding face with continuous holes on the underside (not shown)—and closed surface layers formed on each side face 18 of the resulting ceramic body 15.

Description of the preferred embodiment.

The invention is illustrated but not limited by the following Examples in which the percentages are by weight unless stated otherwise.

Example 1.

A pouring material or casting slip was prepared by adding 15% of water, with 0.3% of sodium hexametaphosphate as a dispersing agent, to calcined alumina powder having a mean grain size of 0.5 μm.

Referring to Figure 1, the slip 3 was poured through the pouring gate 4 into the gypsum mould 1 having a capacity of 100×50×25 mm, previously filled with a foamed urethane body 2 (Product 50, of Bridge Stone Co.) of the same size as the inner cavity of the mould 1. After water in the slip was absorbed into the mould 1, the moulded body was taken out of the mould. The moulded body was dried at a temperature from 50 to 60°C and then heated at 1600°C in an oxidising atmosphere.

The properties of the resulting porous ceramic body 5 are summarised in Table 1.

TABLE 1

| | |
|---|---|
| Bulk specific gravity | 3.00 |
| Permeability | 18.9% |
| Compression strength | 2100 kg/cm$^2$ (206 MPa) |
| Gas permeability | 0.3 cm$^3$ · cm/cm$^2$ · s · H$_2$Ocm. |

Example 2.

A pouring material or casting slip was prepared by adding 14% of water, with 0.5% of sodium hexametaphosphate as a dispersing agent, to stabilised zirconia powder having a grain size distribution consisting of 30% of more than 5 μm and 70% of less than 5 μm.

Referring to Figure 2, a urethane foamed body 12 (Product 30 of Bridge Stone Co.) 100×46×46 mm in size was placed in the centre of the mould 11 with an aperture 17 between the wall of the mould and the said organic foamed material 12. The slip prepared as described above was poured into the mould 11 through the pouring gate 14. After water in the slip 13 was absorbed into the gypsum mould 11, the mould 11 was removed. The resulting moulded body was dried at a temperature of from 50 to 60°C and then heated at 1600°C in an oxidising atmosphere.

The properties of the resulting porous ceramic body 15 with closed sides surfaces 18 and opposing open surfaces 16, as shown in Figure 2(b), are summarised in Table 2.

TABLE 2

| Bulk specific gravity | 4.81 |
|---|---|
| Permeability | 19.5% |
| Compression strength | 3500 kg/cm$^2$ (343 MPa) |
| Gas permeability | 0.6 cm$^3 \cdot$ cm/cm$^2 \cdot$ s $\cdot$ H$_2$Ocm. |

Example 3.

An alumina slurry was prepared by adding 15% of water, with 0.5% of a polyacrylate ester as a dispersing agent, to calcined alumina powder having a mean diameter of 5 μm, agitating the mixture for one hour in a ball mill and degassing.

The slurry thus prepared was poured into a gypsum mould having a cavity size 500×100×40 mm in which had been previously placed a piece of urethane foam (Product 13 of Bridge Stone Co.) having the same size as the mould cavity, and immediately after this the urethane foam was compressed to the size of 100×100×40 mm. After removal from the mould, the cast body was dried at a temperature of 110°C for 24 hours and then baked at 1600°C in an oxidizing atmosphere.

The properties of the resulting porous ceramic body are summarised in Table 3.

TABLE 3

| Bulk specific gravity | 2.8 |
|---|---|
| Permeability | 40% |
| Compression strength | 1800 kg/cm$^2$ (176 MPa) |
| Gas permeability | 1.2 cm$^3 \cdot$ cm/cm$^2 \cdot$ s $\cdot$ H$_2$Ocm. |

Example 4.

An alumina slurry was prepared by adding 18% of water, with 0.1% of alumina cement and 0.5% of a polyacrylate ester as a dispersing agent, to calcined alumina powder having a mean diameter of 5 μm, agitating the mixture for one hour in a ball mill and degassing.

The alumina slurry thus prepared was poured into a gypsum mould having a cavity size 500×100×40 mm in which had been previously placed a piece of urethane foam (Product 13 of Bridge Stone Co.) 300×100×40 mm in size compressed down to 100×100×40 mm. After removal from the mould the cast body was dried at a temperature of 110°C for 24 hours and then baked at 1600°C in an oxidising atmosphere.

The properties of the resulting porous ceramic body are summarised in Table 4.

TABLE 4

| Bulk specific gravity | 2.9 |
|---|---|
| Permeability | 27% |
| Compression strength | 2000 kg/cm$^2$ (196 MPa) |
| Gas permeability | 0.7 cm$^3 \cdot$ cm/cm$^2 \cdot$ s $\cdot$ H$_2$Ocm. |

**Claims**

1. Method for manufacturing a ceramic body having a permeable porous structure by impregnating an organic porous body having a three-dimensional reticulated structure with numerous continuous holes therein, with a ceramic slurry within a mould and then drying and firing the resulting cast body to decompose and remove the organic structure, characterised in that the mould used is a gypsum mould.

2. Method for manufacturing a ceramic body having a permeable porous structure as claimed in Claim 1, characterised in that the organic porous body having a three-dimensional reticulated structure is the same size as the cavity in the mould so as to fill the cavity of the mould.

3. Method for manufacturing a ceramic body having a permeable porous structure as claimed in Claim 1, characterised in that the organic porous body having a three-dimensional reticulated structure is of a smaller size than the cavity in the mould, so as to form a ceramic body which is permeable only in a distinct direction.

4. Method for manufacturing a ceramic body having a permeable porous structure as claimed in any of Claims 1 to 3, characterised in that the organic porous body having a three-dimensional reticulated structure is placed in the cavity of the mould in a compressed state so as to regulate the permeability of the ceramic body produced.

5. Method for manufacturing a ceramic body having a permeable porous structure as claimed in any of Claims 1 to 3, characterised in that the organic porous body having a three-dimensional reticulated structure is compressed after pouring in the ceramic slurry so as to regulate the permeability of the ceramic body produced.

# EP 0 174 529 B1

## Patentansprüche

1. Verfahren zur Herstellung eines keramischen Körpers mit einer durchlässigen porösen Struktur durch Imprägnieren eines organischen porösen Körpers mit einer dreidimensionalen vernetzten Struktur mit zahlreichen kontinuierlichen Löchern darin, mit einer keramischen Aufschlämmung in einer Form und anschließendes Trocknen und Brennen des erhaltenen vergossenen Körpers zur Zersetzung und Entfernung der organischen Struktur, dadurch gekennzeichnet, daß die verwendete Form eine Gipsform ist.

2. Verfahren zur Herstellung eines keramischen Körpers mit einer durchlässigen porösen Struktur nach Anspruch 1, dadurch gekennzeichnet, daß der organische poröse Körper mit einer dreidimensionalen vernetzten Struktur die gleiche Größe wie der Hohlraum in der Form besitzt, so daß er den Hohlraum der Form ausfüllt.

3. Verfahren zur Herstellung eines keramischen Körpers mit einer durchlässigen porösen Struktur nach Anspruch 1, dadurch gekennzeichnet, daß der organische poröse Körper mit einer dreidimensionalen vernetzten Struktur eine kleinere Größe als der Hohlraum in der Form besitzt, so daß ein keramischer Körper gebildet wird, der nur in einer bestimmten Richtung durchlässig ist.

4. Verfahren zur Herstellung eines keramischen Körpers mit einer durchlässigen porösen Struktur nach einem der Ansprüche 1 bis 3, dadurch gekennzeichnet, daß der organische poröse Körper mit einer dreidimensionalen vernetzten Struktur in den Hohlraum der Form in einen komprimierten Zustand eingebracht wird um die Durchlässigkeit des erzeugten keramischen Körpers zu steuern.

5. Verfahren zur Herstellung eines keramischen Körpers mit einer durchlässigen porösen Struktur nach einem der Ansprüche 1 bis 3, dadurch gekennzeichnet, daß der organische poröse Körper mit einer dreidimensionalen vernetzten Struktur nach dem Eingießen der keramischen Aufschlämmung komprimiert wird, um die Durchlässigkeit des erzeugten keramischen Körpers zu steuern.

## Revendications

1. Procédé de fabrication d'un corps céramique ayant une structure poreuse perméable, par imprégnation dans un moule, avec une suspension céramique, d'un corps poreux organique ayant une structure réticulée tridimensionnelle et comportant de nombreux trous continus, puis par séchage et cuisson du corps coulé obtenu, pour décomposer et éliminer la structure organique, caractérisé en ce que qe moule utilisé est un moule de gypse.

2. Procédé be fabrication d'un corps céramique ayant une structure poreuse perméable selon la revendication 1, caractérisé en ce que le corps poreux organique ayant une structure réticulée tridimensionnelle a la même taille que la cavité du moule de façon à remplir la cavité du moule.

3. Procédé de fabrication d'un corps céramique ayant une structure poreuse perméable selon la revendication 1, caractérisé en ce que le corps poreux organique ayant une structure réticulée tridimensionnelle a une taille plus petite que la cavité du moule, de façon à former un corps céramique qui ne soit perméable que dans une certaine direction.

4. Procédé de fabrication d'un corps céramique ayant une structure poreuse perméable selon l'une quelconque des revendications 1 à 3, caractérisé en ce que le corps poreux organique ayant une structure réticulée tridimensionnelle est placé dans la cavité du moule à l'état comprimé de façon à réguler la perméabilité du corps céramique produit.

5. Procédé de fabrication d'un corps céramique ayant une structure poreuse perméable selon l'une quelconque des revendications 1 à 3, caractérisé en ce que le corps poreux organique ayant une structure réticulée tridimensionnelle est comprimé, après coulée de la suspension céramique, pour réguler la perméabilité du corps céramique produit.

5

FIG.1

(a)

(b)

FIG.2

(a)

(b)